# Europäisches Patentamt
# European Patent Office
# Office européen des brevets

(19)

(11) Numéro de publication: **0 002 976**
**B1**

(12) **FASCICULE DE BREVET EUROPEEN**

(45) Date de publication du fascicule du brevet: **10.03.82**

(21) Numéro de dépôt: **78400233.9**

(22) Date de dépôt: **12.12.78**

(51) Int. Cl.³: **B 29 C 17/10, G 02 B 5/16, H 01 B 13/06, B 23 Q 11/00**

(54) Dispositif d'usinage en continu de rainures en hélice sur une tige cylindrique.

(30) Priorité: **04.01.78 FR 7800130**
**13.06.78 FR 7817678**

(43) Date de publication de la demande:
**11.07.79 Bulletin 79/14**

(45) Mention de la délivrance du brevet:
**10.03.82 Bulletin 82/10**

(84) Etats contractants désignés:
**BE CH DE GB IT**

(56) Documents cités:
**DE - A - 1 479 623**
**DE - C - 928 683**
**FR - A - 1 350 724**
**FR - A - 1 476 393**
**FR - A - 2 052 016**

(73) Titulaire: **LIGNES TELEGRAPHIQUES ET TELEPHONIQUES Société anonyme**
**89 Rue de la Faisanderie**
**F-75782 Paris Cedex 16 (FR)**

(72) Inventeur: **de Vecchis, Michel**
**S.A.Lignes Telegraphiques 89 Rue de la Faisanderie**
**F-75782 Paris Cedex 16 (FR)**
Inventeur: **Hulin, Jean-Pierre**
**S.A.Lignes Telegraphiques 89 Rue de la Faisanderie**
**F-75782 Paris Cedex 16 (FR)**
Inventeur: **Dubois, Gilles**
**S.A.Lignes Telegraphiques 89 Rue de la Faisanderie**
**F-75782 Paris Cedex 16 (FR)**

(74) Mandataire: **Guyot, Liliane**
**Thomson-CSF SCPI 173, Boulevard Haussmann**
**F-75360 Paris Cedex 08 (FR)**

Courier Press, Leamington Spa, England.

## Dispositif d'usinage en continu de rainures en hélice sur une tige cylindrique

La présente invention concerne un dispositif perfectionné d'usinage en continu assurant la réalisation simultanée de plusieurs rainures, généralement longitudinales, sur une tige cylindrique mince. Par généralement longitudinales, on entend soit parallèles à l'axe du cylindre, soit enroulées en hélice autour du cylindre avec un pas simple ou alterné. Par tige cylindrique mince, on entend une pièce cylindrique de longueur pouvant atteindre plusieurs kilomètres et de diamètre compris entre quelques millimètres et quelques centimètres. L'invention concerne plus particulièrement l'usinage de structures complexes comportant une âme rigide sur laquelle est extrudée une gaine lisse en matière isolante.

De telles structures rainurées sont utilisables notamment comme élément central (support) d'un câble ou d'un élément de câble dont les conducteurs sont des fibres optiques ainsi qu'il est décrit notamment dans le brevet français 2.388.931 déposée par la Demanderesse le 27 avril 1977, pour "Procédé de fabrication d'éléments de câblage comportant des fibres optiques par machine verticale." Il est connu par brevet français d'obtenir directement par extrusion une telle structure avec ses rainures. Toutefois, l'usinage d'une structure lisse, obtenue au préalable par exemple par extrusion, présente un certain nombre d'avantages, parmi lesquels:

—une plus grande souplesse d'exploitation: il est ainsi possible d'extruder à grande vitesse des structures cylindriques lisses et de les stocker en vue d'un usinage ultérieur de différents types de rainures correspondant à différents types de câble;

—un avantage économique lié au fait que la vitesse de défilement utilisable avec un usinage peut être supérieure à celle que l'on peut atteindre par extrusion directe du profil rainuré;

—la possibilité de constitution d'une chaîne de fabrication en continu de câbles à fibres optiques, par mise en tandem d'un poste de fabrication du support rainuré par usinage et d'un poste de pose des fibres dans les rainures: en effet, l'usinage permet un arrêt suivi d'une remise en marche de la chaîne sans création de discontinuité sur le support, alors que lorsque le support rainuré est obtenu directement par extrusion, tout arrêt et remise en marche entraîne la naissance d'irrégularités sur le support telles que le tronçon de câble correspondant peut être rendu inutilisable.

Différents dispositifs d'usinage de rainures en hélice sont connus, parmi lesquels on peut citer:

—un dispositif de fabrication en continu de quartes hautes fréquences (brevet français n° 1 350 724); cette quarte comporte une armature recouverte de matière plastique isolante, dans laquelle sont fraisés des sillons hélicoïdaux où sont encastrés les fils conducteurs; les sillons sont donc réalisés par quatre groupes de fraisage mobiles, ce qui est une solution complexe et onéreuse;

—un dispositif pour former un filet hélicoïdal sur une tige cylindrique en matière thermoplastique, destiné à la fabrication de câbles coaxiaux (brevet français 1 476 393); le filet hélicoïdal est réalisé par déformation thermique sans enlèvement de matière, ce qui présente le double inconvénient d'être limité aux matériaux thermoplastiques et d'être imprécis.

La présente invention a pour objet un dispositif d'usinage permettant d'éviter ces inconvénients. Plus précisément, le dispositif selon l'invention assure l'usinage en continu de rainures en hélice, à pas alterné ou non alterné, sur une tige cylindrique, pour la réalisation d'éléments de câble à fibres optiques, comportant une tête d'usinage percée d'une ouverture centrale, cette tête étant animée d'un mouvement de rotation par rapport à la tige qui est entraînée en translation dans l'ouverture, la tête d'usinage comportant un corps chauffant et un outil de coupe solidaire du corps chauffant, l'outil; de coupe comportant une feuille métallique mince minie d'une ouverture à travers laquelle la tige à usiner est entraînée, la forme de l'ouverture définissant le profil de la tige usinée.

L'invention sera bien comprise en se reportant à la description suivante et aux figures qui l'accompagnent données à titre d'exemple non limitatif et dans lesquelles:

— la figure 1 est un schéma des postes de fabrication d'un support (ou jonc) cylindrique rainuré incorporant le dispositif selon l'invention;

—la figure 2 est une vue explosée de la tête de découpe dont la figure $2_A$ représente un détail;

—la figure 3 est une vue en coupe du poste d'usinage comportant le poste d'élimination des copeaux associé par un plan passant par la direction de défilement du support;

—la figure 4 est une vue en élévation du poste d'élimination des copeaux;

—les figures 5 et 6 sont des schémas représentant le mouvement des couteaux utilisés pour l'élimination des copeaux;

—la figure 7 représente l'influence de la vitesse de défilement et de la température sur l'état de surface des rainures.

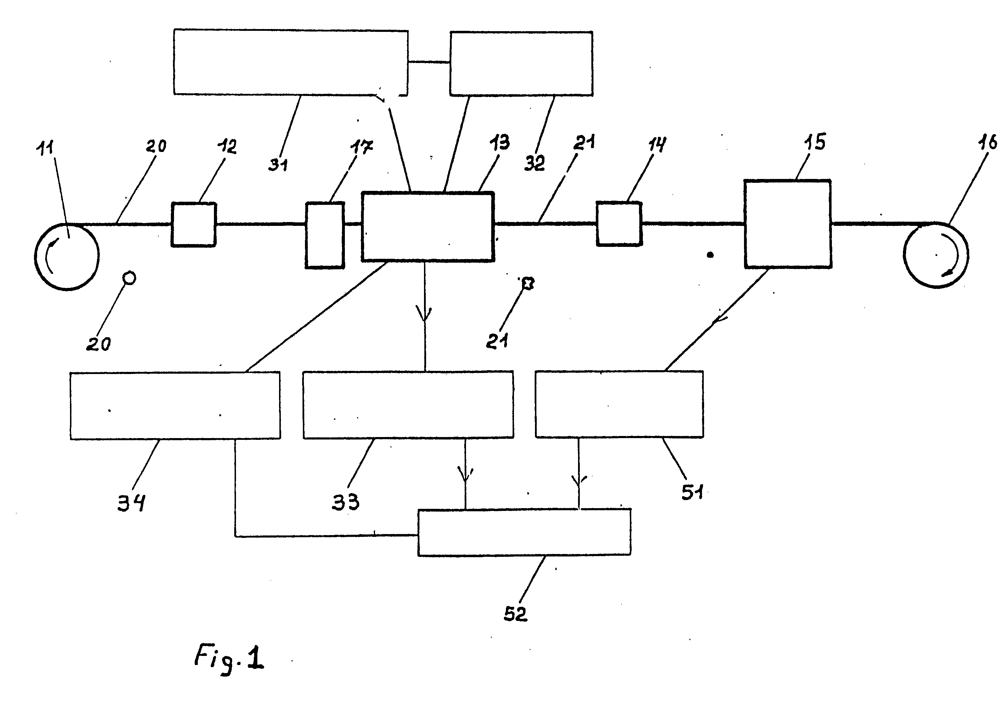

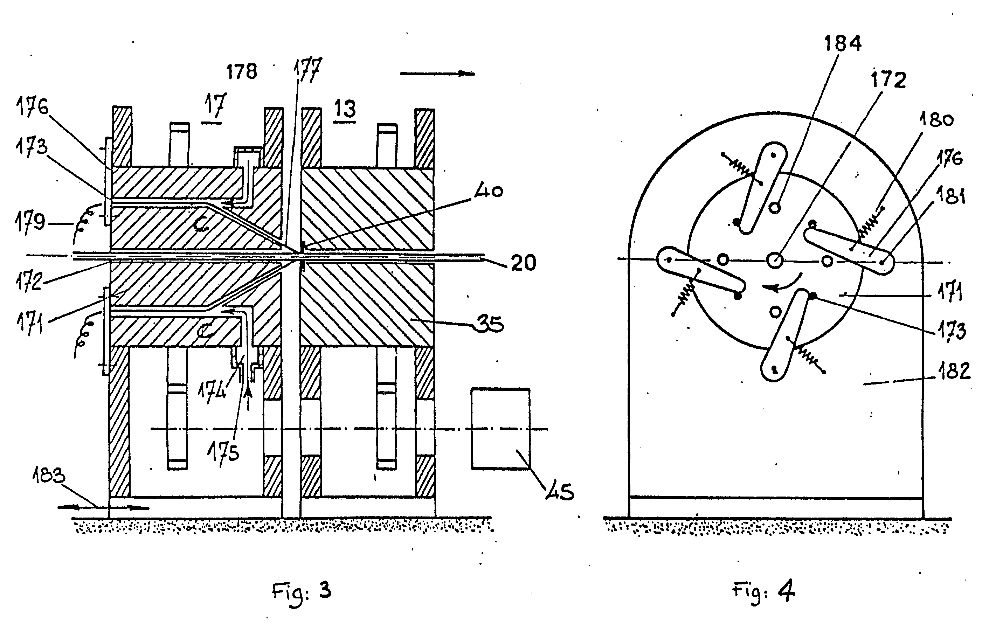

La figure 1 représente une bobine débitrice 11, libre sur son axe horizontal, délivrant un jonc lisse 20 qui est maintenu par un guide 12 parallèle à la direction de défilement du jonc, perpendiculaire à l'axe de la bobine 11. Le jonc se déplace parallélement à luimême sur tout son parcours. Il est important que le jonc soit maintenu dans la direction de défilement avec précision de part et d'autre de la tête d'usinage 13 pour les raisons précisées plus loin d'où la nécessité de disposer un second guide 14 à la sortie de la tête d'usinage 13. Un poste 17 d'élimination des copeaux est prévu, par exemple en amont de la tête 13. Cette tête décrite plus en détail figure 3, comporte un outil de coupe fixé sur une plaque chauffante; le chauffage est assuré par un générateur de courant 32 alimentant des résistances placées dans la plaque. La température de l'outil est maintenue à la valeur désiré par un dispositif d'asservissement 31, comportant une sonde, qui commande un générateur 32. Le tête d'usinage 13 est entraînée en rotation par un organe moteur non représenté dont la vitesse est fixée par une commande extérieure 34. L'asservissement de la vitesse de rotation est assuré par un circuit de contrôle 52 qui reçoit les indications d'un capteur 33, par exemple du type photoélectrique, de la vitesse de rotation de la tête 13, et d'un second capteur 51 de la vitesse de défilement du jonc, de façon à maintenir le pas de l'hélice des rainures à la valeur voulue. Le défilement est assuré par un cabestan 15 entraîné par un organe moteur, non représenté. Le jonc rainuré est par exemple emmagasiné sur une bobine 16. On a représenté respectivement en 20 et 21 les profils du jonc avant et après passage à travers la tête d'usinage 13.

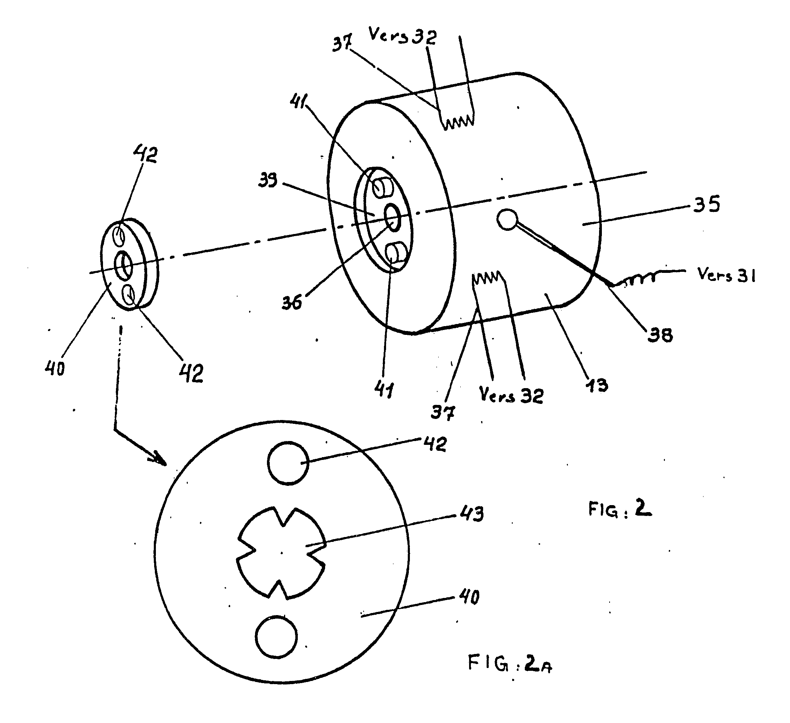

La figure 2 représente une vue explosée de la tête d'usinage 13. Celle-ci comporte un corps chauffant constitué par une masse métallique cylindrique 35, percée d'une ouverture centrale 36, dans laquelle sont prévues des ouvertures abritant des éléments chauffants, tels 37, et une sonde thermométrique représentée en 38.

Le corps 35 comporte un logement 39 destiné à abriter l'outil de coupe 40, de préférence sur la face amont du corps 35. L'outil 40 est constitué par un disque métallique posé dans le logement 39. Deux tétons 41 coopèrent avec des ouvertures 42 usinées dans 40 pour maintenir le disque fixe par rapport à la masse métallique chauffante 35.

La figure 2$_A$ représente, agrandi et vu de face, l'outil 40. Ainsi qu'il apparaît, celui-ci présente une ouverture centrale 43 définissant le profil du jonc après usinage. On explique plus loin comment sont fixées les dimensions de 43 compte tenu des conditions de fonctionnement de l'ensemble.

Selon une variante de mise en oeuvre, l'outil 40 est obtenu par découpe chimique d'une feuille métallique d'acier d'une épaisseur de quelques dixièmes de millimètres. Au cours du fonctionnement, la tête 13, constituée de le corps chauffant 35 et de l'outil 40, est animée d'un mouvement de rotation autour de l'axe de l'ouverture 36. Le jonc lisse pénètre dans les ouvertures 43 et 36. L'outil est maintenu à la température désirée par le corps chauffant 35 et l'asservissement est commandé par la sonde 38. La vitesse de rotation est fixée et asservie à la vitesse de défilement de façon à obtenir le pas désiré, alterné ou non, pour les hélices creusées par les parties saillantes de la surface délimitant l'ouverture 43.

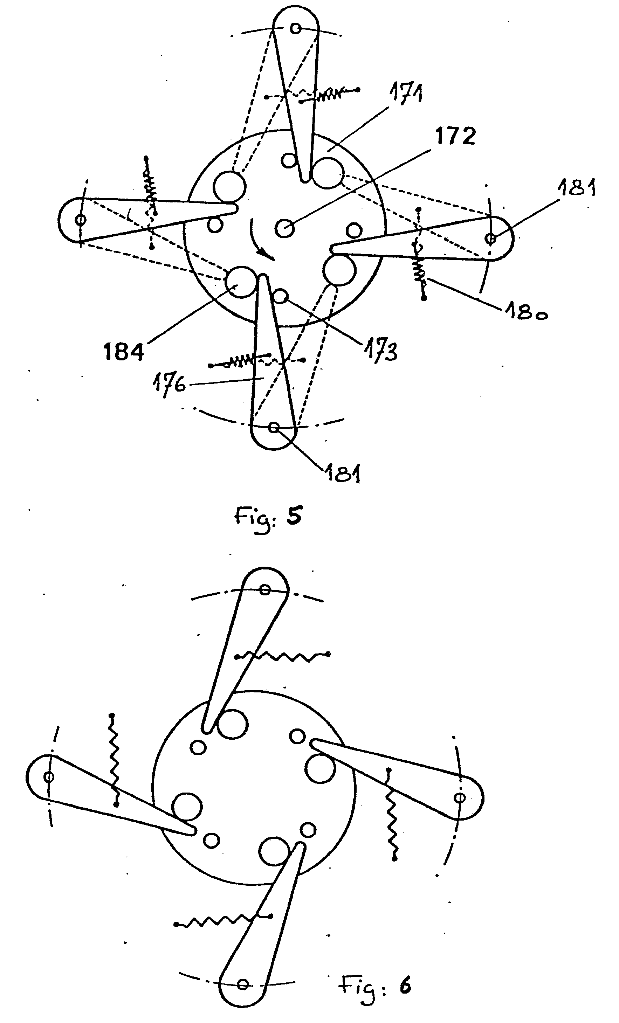

On a représenté sur la figure 3 une vue, en coupe par un plan vertical passant par l'axe du jonc 20 à usiner, de l'ensemble du dispositif d'usinage selon l'invention, constitué du dispositif d'élimination des copeaux 17 et de la tête d'usinage 13. La flèche représente le sens de défilement du jonc 20. En amont de la tête 13 se trouve le dispositif d'élimination des copeaux 17 comportant une seconde structure métallique cylindrique massive 171 présentant une ouverture centrale 172 destinée au passage du jonc 20 ainsi que des canaux latéraux, tels 173, présentant une première partie parallèle à l'axe de défilement du jonc et une seconde partie, du côté de la tête d'usinage 13, cônique et orientée de façon que le sommet du cône se trouve défini par l'outil de coupe 40. La partie de ces canaux parallèle à l'axe de défilement est prolongée au-delà de la partie cônique puis coudée de façon à communiquer avec une chambre annulaire 174 commune à toutes les canalisations 173, par l'intermédiaire des prolongements radiaux 178. La chambre 174 communique par un ajutage 175 avec une réserve de gaz comprimé à une pression supérieure à la pression atmosphérique. On a représenté par les flèches le trajet du gaz comprimé. Ainsi qu'il est bien connu, le déplacement du gaz sous l'action de la décomposition crée, au voisinage des points de raccordement C entre la canalisation parcourue par le gaz et le canal 173, une dépression par effet venturi qui aspire les copeaux entre l'outil 40 et le point C, les copeaux se trouvant ensuite, après le point C, entraînés par le gaz. L'ensemble de la pièce 171 est entraîné en rotation par le même moteur 45, en synchronisme avec la tête 13. La face amont ou extérieure de la pièce 171 porte des couteaux 176, plus faciles à voir sur la figure 4, qui passent devant l'extrémité des canaux 173. On a représenté en 179 un copeau dont l'extrémité est coupée par le couteau 176. La face amont de la pièce 171 porte, en plus des ouvertures constituées par les extrémités des canaux 173, un ensemble de doigts, tel 184, répartis, comme les ouvertures des canaux 173, sur une circonférence concentrique à la pièce 171 et dont le rayon est prévu pour que les couteaux 176 arrivent en butée sur les doigts 184 sous l'action de la force exercée par les ressorts 180 qui font pivoter les couteaux autour d'un axe 181 solidaire du bâti 182 de la machine. La flèche représente le sens de rotation de la pièce 171 en cours de fonctionnement. Le mouvement des couteaux 176 est facilement compris en se reportant aux figures schématiques 5 et 6. On a représenté sur la figure 5, en trait plein, l'une des positions extrêmes des couteaux 176 et en trait pointillé une deuxième position de ces couteaux. Ainsi qu'il apparaît sur la figure 5, la rotation de la pièce 171 tend à entrainer les couteaux vers la droite sous l'action de la pression exercée par les doigts 184. Les couteaux 176 tournent autour de leur axe 181 en tendant le ressort 180 jusqu'à ce que cette rotation permette aux couteaux 176 d'échapper aux doigts 184 (position en pointillé des couteaux sur la figure 5). Sous l'action de la force de rappel exercée par le ressort 180, le couteau est alors brutalement ramené dans sa position initiale jusqu'à ce qu'il vienne buter sur le doigt 184 suivant. Sur son passage, le couteau rencontre une ouverture 173 occupée par un ou plusieurs copeaux qui se trouvent coupés sous l'action de la force de rappel du ressort 180. Les doigts 184 déplacent à nouveau les couteaux 176 vers la droite et le même mouvement se reproduit.

Il est prévu de réduire le nombre des canaux 173 par rapport à celui des copeaux et d'utiliser un canal à l'aspiration de deux ou plusieurs copeaux lorsque les points d'usinage des copeaux sont suffisamment proches. L'ensemble du bâti 182 est monté sur des rails et peut coulisser parallélement à l'axe de défilement ainsi qu'il est représenté par la flèche 183 (figure 3). Au démarrage les copeaux sont enfilés manuellement dans les canaux 173, le bâti 182 étant éloigné de la tête de découpe 13. Puis le bâti 182 est remis dans sa position la plus voisine de la tête, verrouillé en position et l'alimentation en gaz est connectée à l'ajutage 175.

Les tronçons de copeaux 179 sont reçus dans un récipient sur un tapis transporteur qui les emmène à un point de décharge ou aspirés dans un canal d'évacuation.

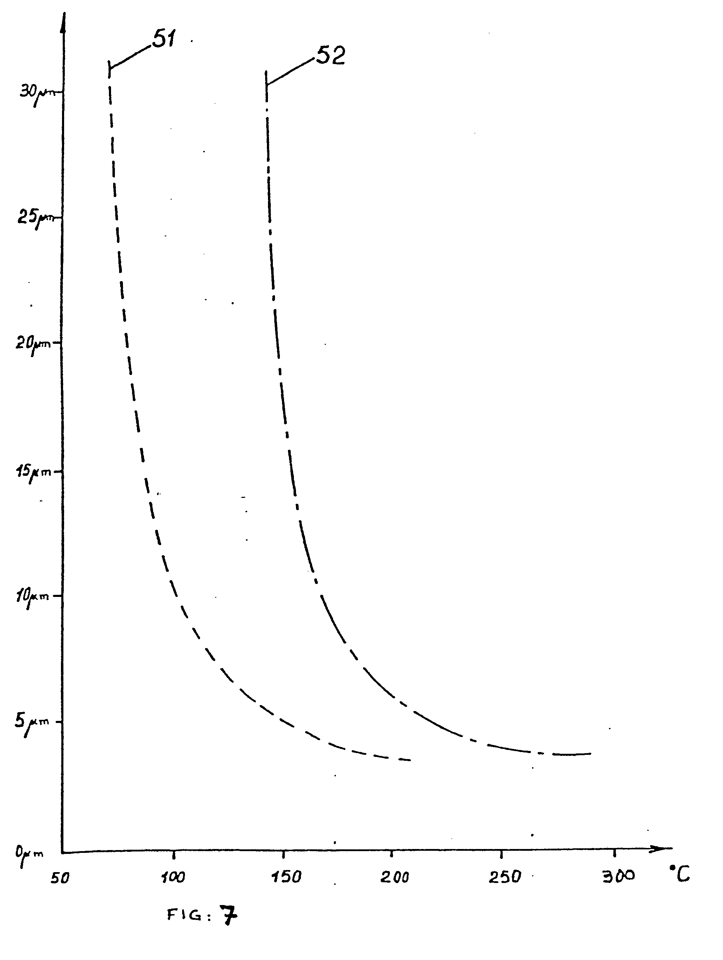

La figure 7 représente la variation de l'amplitude maximale des irrégularités sur les faces des rainures en fonction de la température de travail dans le cas d'une vitesse de défilement relativement lente (courbe 51), c'est-à-dire de l'ordre de 5 mètres/minute et dans le cas d'une vitesse plus rapide (courbe 52) c'est-à-dire de l'ordre de 15 mètres/minute pour du polythène de densité moyenne.

Les résulats montrent que pour le polyéthylène de densité moyenne, un état de surface acceptable est obtenu dans la fourchette de températures de 150°C à 200°C pour des vitesses inférieures à 10 mètres/minute et passe de 200°C à 280°C pour des vitesses supérieures à cette limite. De même pour le chlorure de polyvinyle à une vitesse de défilement de 10 mètres/minute, une température de l'outil comprise entre 200°C et 300°C a donné des résultats acceptables. Dans le cas du polypropylène, la même vitesse de défilement correspond à un chauffage de l'outil à une température comprise entre 100°C et 160°C.

Pour un même matériau et un même outil, les tolérances sur les dimensions des rainures dépendent de la vitesse de défilement.

Par exemple, dans le cas du polyéthylène de moyenne densité et dans la fourchette de vitesse 0 à 10 mètres/minute les variations de dimensions des rainures sont inférieures à 2/100 mm. Pour des vitesses plus élevées, la variation des dimensions devient plus importante et peut atteindre des valeurs de l'ordre de 1/10 mm pour une vitesse supérieure à 20 mètres/minute, ce qui nécessite une correction du profil de l'outil.

En résumé, le profil, le pas, la nature du matériau et l'état de surface des rainures étant imposés, le fabricant a avantage à utiliser la vitesse de défilement maximale et à fixer la température et le profil de l'outil 40 de façon à répondre aux conditions d'état de surface imposées. La vitesse de rotation de la tête de découpe est définie par le pas des rainures, une fois la vitesse de défilement fixée. Lorsque le compromis est difficile à atteindre, l'usinage peut être exécuté en deux étapes successives et synchronisées, le premier usinage servant au dégrossissage et le deuxième aux finitions. Deux dispositifs d'usinage (17+13) sont alors disposés le long de la pièce cylindrique à une distance correspondant à un nombre entier de pas des hélices et les profils des outils de coupe 40 sont définis en conséquence.

**Revendications**

1. Dispositif d'usinage en continu de rainures en hélice, à pas alterné ou non alterné, sur une tige (20, 21) cylindrique, pour la réalisation d'éléments de câble à fibres optiques, comportant une tête d'usinage (13) percée d'une ouverture centrale (36), cette tête étant animée d'un mouvement de rotation par rapport à la tige (20) qui est entraînée en translation dans l'ouverture, le dispositif étant caractérisé par le fait que la tête d'usinage (13) comporte un corps chauffant (35) et un outil de coupe (40) solidaire du corps chauffant (35), l'outil de coupe (40) comportant une feuille métallique mince munie d'une ouverture (43) à travers laquelle la tige à usiner (20) est entraînée, la forme de l'ouverture (43) définissant le profil de la tige usinée (21).

2. Dispositif d'usinage selon la revendication 1, caractérisé par le fait qu'il comporte en outre en amont de la tête d'usinage un dispositif d'élimination des copeaux (17) comportant une structure métallique cylindrique massive (171) dans laquelle est ménagé un premier canal (172) pour le passage de la tige (20) et un ensemble de canaux latéraux (173) disposés autour du premier canal (172), de telle sorte que les axes des canaux (173) de cet ensemble soient concourrants dans la zone de l'ouverture (43) de l'outil de coupe (40), chacun des canaux latéraux (173) étant en communication (174, 175) avec une source de gaz comprimé assurant l'aspiration des copeaux à proximité de l'outil de coupe (40) puis le soufflage de ceux-ci.

3. Dispositif d'usinage selon l'une des revendications précédentes, caractérisé par le fait que l'outil de coupe (40) est placé sur la face amont du corps chauffant (35), dans le sens de translation de la tige (20, 21).

4. Dispositif d'usinage selon l'une des revendications précédentes, caractérisé par le fait que les canaux latéraux (173) du dispositif d'élimination des copeaux (17) sont disposés sur une surface cylindroconique dont le sommet est situé dans l'ouverture (43) de l'outil de coupe (40).

5. Dispositif d'usinage selon l'une des revendications précédentes, caractérisé par le fait que les canaux latéraux (173) débouchent sur la face amont de la pièce (171) du dispositif d'élimination des copeaux (17) et que celle-ci porte des couteaux (176) assurant le découpage des copeaux à la sortie des canaux latéraux (173).

6. Dispositif d'usinage selon la revendication 5, caractérisé par le fait que les couteaux (176) sont animés d'un mouvement alternatif sous l'action d'une force d'entraînement exercée par un doigt (184) solidaire de la pièce (171) et d'un ressort de rappel (180).

## Claims

1. Apparatus for continuous cutting of helical threads with changing or unchanging pitch on a cylindrical rod (20, 21) for producing elements of optical fiber cables, said apparatus comprising a die head (13) pierced by a central opening (36), said head being driven in a rotating movement in relation to the rod (20) which is driven in translation in said opening, said apparatus being characterized by the fact that the die head (13) comprises a heating body (35) and a cutting tool (40) solidly connected with said heating body (35), said cutting tool (40) comprising a thin metal foil provided with an opening (43) through which the rod (20) to be threaded is driven, the form of the opening (43) defining the profile of the threaded rod (21).

2. Apparatus for continuous cutting of helical threads according to claim 1, characterized by the fact that it comprises, in addition, upstream of the cutting head, a means (17) for elimination of chips comprising a massive cylindrical metallic structure (171) in which there is provided a first channel (172) for the passage of the rod (20), and a group of lateral channels (173) which are arranged around the first channel (172) in such way that the axes of the channels (173) of this group converge in the zone of the opening (43) of the cutting tool (40), each of said lateral channels (173) being in communication (174, 175) with a source of pressurized gas which assures the suction of the chips near the cutting tool (40), and thereafter the blowing out of these chips.

3. Apparatus according to one of the preceding claims, characterized by the fact that the cutting tool (40) is placed at the upstream face of the heating body (35), with relation to the sense of the movement of translation of the rod (20, 21).

4. Apparatus according to one of the preceding claims, characterized by the fact that the lateral channels (173) of the means (17) for elimination of the chips are arranged on a cylindro-conical surface, the point of which is situated in the opening (43) of the cutting tool (40).

5. Apparatus according to one of the preceding claims, characterized by the fact that the lateral channels (173) open at the upstream face of the part (171) of the means (17) for elimination of the chips, and that this side carries knives (176) which assure the cutting of the chips at the exit of said lateral channels (173).

6. Apparatus according to claim 5, characterized by the fact that the knives (176) are driven in an alternating movement by the action of a driving force supplied by a finger (184) which is fixedly connected to the part (171), and by a pull-back spring (180).

## Patentansprüche

1. Vorrichtung zum kontinuierlichen Schneiden von Spiralnuten mit gleichbleibender oder wechselnder Steigung auf einem zylindrischen stabförmigen Körper (20, 21) zur Herstellung von Elementen optischer Faserkabeln, welche einen Schneidkopf (13) mit einer ihn durchbohrenden Mittelöffnung (36) aufweist, der bezüglich des Stabes (20), der in der Öffnung in einer Verschiebungsbewegung angetrieben ist, mit einer Drehbewegung angetrieben ist, wobei die Vorrichtung dadurch gekennzeichnet ist, daß der Schneidkopf (13) einen Heizkörper (35) und ein mit dem Heizkörper (35) fest verbundenes Schneidwerkzeug (40) aufweist und das Schneidwerkzeug (40) ein dünnes Metallblatt aufweist, das mit einer Öffnung (43) versehen ist, durch welche hindurch der zu bearbeitende Stab (20) bewegt wird, wobei die Form der Öffnung (43) das Profil des bearbeiteten Stabes (21) bestimmt.

2. Schneidvorrichtung nach Anspruch 1, dadurch gekennzeichnet, daß sie außerdem vor dem Schneidkopf, in der Durchlaufrichtung des Stabes gesehen, eine Spanabführvorrichtung (17) aufweist, die einen massiven zylindrischen Metallkörper (171) aufweist, in dem ein erster Kanal (172) für den Durchtritt des Stabes (20) und eine Gruppe von Seitenkanälen (173) ausgebildet sind, welche rings um den ersten Kanal (172) so angeordnet sind, daß die Achsen der Kanäle (173) dieser Gruppe in der Zone der Öffnung (43) des Schneidwerkzeugs (40) durch den selben Punkt gehen, wobei jeder der Seitenkanäle (173) eine Verbindung (174, 175) mit einer Druckgasquelle aufweist, welche das Ansaugen der Späne in der Nähe des Schneidwerkzeugs (40) und anschließend das Ausblasen derselben gewährleistet.

3. Schneidvorrichtung nach einem der vorangehenden Ansprüche, dadurch gekennzeichnet, daß das Schneidwerkzeug (40) an der bezüglich der Bewegungsrichtung des Stabes (20, 21) stromaufwärts liegenden Seite des Heizkörpers (35) angeordnet ist.

4. Schneidvorrichtung nach einem der vorangehenden Ansprüche, dadurch gekennzeichnet, daß die Seitenkanäle (173) der Spanabführvorrichtung (17) auf einer zylindrisch-konischen Fläche angeordnet sind, deren Spitze in der Öffnung (43) des schneidwerkzeugs (40) liegt.

5. Schneidvorrichtung nach einem der vorangehenden Ansprüche, dadurch gekennzeichnet, daß die Seitenkanäle (173) an der stromaufwärts liegenden Seite des Körpers (171) der Spanabführvorrichtung (17) münden und daß diese Messer (176) trägt, welche das Abschneiden der Späne am Ausgang der Seitenkanäle (173) besorgen.

6. Schneidvorrichtung nach Anspruch 5, dadurch gekennzeichnet, daß die Messer (176) unter der Wirkung einer Antriebskraft, die von einem mit dem Körper (171) fest verbunden Finger (184) und einer Rückholfeder (180) ausgeübt wird, mit einer Wechselbewegung angetrieben sind.

Fig. 1

37 Vers 32

41

39

42

42

40

42

36

41

37

Vers 32

13

38

Vers 31

35

FIG: 2

42

43

40

FIG: 2A

0002976

Fig. 3

Fig. 4

0002976

Fig: 5

Fig: 6

4

FIG: 7